# DEMANDE DE BREVET EUROPEEN

(11) **EP 1 502 844 A1**
(43) Date de publication de la demande: **02.02.2005**
(21) Numéro de dépôt: 04291940.7
(22) Date de dépôt: 29.07.2004
(51) Int. Cl.: B62D 65/08

(54) **Cellule de pose dynamique d'un joint d'étanchéité sur un support tel la caisse ou un élément de carrosserie d'un véhicule à moteur par exemple**

(30) Priorité: 30.07.2003 FR 0309378
(71) Demandeur: HUTCHINSON, 75008 Paris (FR)
(72) Inventeur: Drivon, Stéphane, 45410 Chalette sur Loing (FR); Auclair, Benoît, 45200 Montargis (FR)
(74) Mandataire: Doireau, Marc

(57) **Abrégé**

Cellule de pose dynamique et en continu d'un joint d'étanchéité adhésivé (3a) sur une caisse ou un élément de carrosserie d'un véhicule à moteur par exemple, cette cellule (1) comprenant au moins un poste d'alimentation (P₁) d'un profilé extrudé (3) avec une partie de fixation (4) qui reçoit un système adhésivé (6) recouvert d'un film protecteur (7), une tête automatisée de pose (10) du joint (3a) découpé à longueur dans le profilé (3) par des moyens de découpe (20), un robot (R) manipulant soit l'élément de carrosserie autour de la tête automatisée qui est fixe, soit la tête automatisée autour de la caisse ou de l'élément de carrosserie qui est fixe, la cellule de pose (1) comprenant également des moyens de préhension (30) du film protecteur (7) du profilé (3), ces moyens de préhension (30) étant constitués par au moins un dispositif (32) apte à décoller le film protecteur (7) du profilé (3), caractérisée en ce que le dispositif (32) apte à décoller le film protecteur (7) coopère avec des moyens de reprise (7a, 42) du film protecteur (7) après découpe du joint (3a) dans le profilé (3).

## Description

L'invention concerne une cellule de pose dynamique en continu d'un joint d'étanchéité adhésivé sur un support tel la caisse ou un élément de carrosserie d'un véhicule à moteur par exemple.

D'une manière générale, les joints actuellement utilisés en étanchéité de carrosserie peuvent être fixés de plusieurs manières. On peut utiliser des clips de positionnement et/ou de maintien, qui sont rapportés ou intégrés aux joints, des joints présentant une pince rigide ou semi-rigide en forme de U destinée à être chaussée sur la feuillure d'un support de réception, des rails de fixation dans lesquels les joints sont clippés, ou des joints adhésivés qui adhèrent sur le support de réception.

Les joints adhésivés qui se fixent par collage présentent un grand nombre d'avantages parmi lesquels on peut citer : une excellente étanchéité entre le joint et son support de réception, un poids faible, une conception simplifiée qui ne nécessite pas la présence d'éléments rapportés, et une pose automatisable.

La pose d'un joint adhésivé qui a été préalablement muni de son système adhésif, s'effectue à l'heure actuelle à l'aide d'un outillage spécifiquement conçu pour s'adapter à la géométrie du support de réception. Un opérateur saisit le joint, le positionne sur l'outillage de pose et retire le film protecteur ("liner" en langue anglaise) du système adhésif. Ensuite, l'outillage se positionne automatiquement au voisinage du support de réception et y dépose le joint en appliquant sur toute la périphérie du support, pendant quelques secondes, une pression suffisante pour que le système adhésif adhère correctement.

Une telle technologie de pose de joints adhésivés dite de pose statique présente cependant un certain nombre de limites. Plus précisément, l'outillage d'application du joint adhésivé est spécifique à chaque support de réception, ce qui engendre des investissements lourds ; la multiplication des outillages de pose génère un encombrement de la chaîne de montage, un temps global de montage assez important (temps de pose du joint par l'opérateur sur l'outillage, temps d'approche du support de réception, temps de mise en pression, ...); une mise en pression qui n'est pas optimale sur toute la périphérie du joint ; et une intervention humaine pour monter le joint sur l'outillage spécifique à chaque support de réception.

Récemment, une nouvelle technologie de pose de joints adhésivés dite de pose dynamique est apparue. Selon un premier mode de réalisation, le système est constitué par un robot qui manipule le support de réception du joint pour le présenter devant une tête de pose fixe qui applique le joint adhésivé. La tête de pose intègre plusieurs galets motorisés qui permettent l'avancement du joint, le décollement progressif du film protecteur et la mise en pression du joint contre le support de réception. Le robot déplace le support de réception suivant des mouvements de translation et/ou rotation au fur et à mesure que les galets motorisés de la tête de pose déroulent et appliquent le joint. Dans le cas d'un joint déposé en continu sur toute la périphérie du support de réception et une fois que le robot a effectué un mouvement de rotation de 360° qui est couplé à des mouvements de translation pour suivre la forme du support de réception, la tête de pose coupe le joint de manière à ce que les deux extrémités du joint soient face à face sans laisser de jeu entre ces deux extrémités. Dans un second mode de réalisation de cette nouvelle technologie, le support de réception est fixe et le robot manipule la tête de pose.

Ces deux systèmes de pose robotisés présentent un grand nombre d'avantages par rapport au cas dit statique, en particulier : la flexibilité du robot qui permet de déposer un joint sur plusieurs types de supports de réception pour une même gamme de véhicules ou sur des véhicules différents ; la possibilité de déposer plusieurs types de joint sur un même support ou sur des supports différents en prévoyant autant de têtes de pose que des références de joints ; le robot peut appliquer une pression locale très forte pour assurer une excellente tenue de l'adhésif ; des investissements réduits de manière importante ; et un temps de pose fortement réduit.

Ces cellules de pose dynamique robotisées de joints adhésivés peuvent être alimentées par un joint stocké en grande longueur sur une bobine ou dans un container par exemple.

Cependant, une telle alimentation du joint n'est pas sans poser de problèmes : lorsque le robot procède à une coupe du joint adhésivé. En effet, si le film de protection du système adhésif a été retiré au moment de la coupe, la bande adhésive va coller aux outils de découpe, ce qui va engendrer des perturbations dans le processus de pose du joint. Par contre, si les outils de découpe coupent le joint en présence du film protecteur, le robot ne saura plus reprendre ce film protecteur et une intervention humaine devient alors nécessaire.

Un but de l'invention est de concevoir une cellule de pose d'un joint adhésivé qui puisse prendre en compte les problèmes évoqués précédemment.

A cet effet, l'invention propose une cellule de pose dynamique et en continu d'un joint d'étanchéité adhésivé sur une caisse ou un élément de carrosserie d'un véhicule à moteur par exemple, cette cellule comprenant au moins un poste d'alimentation d'un profilé extrudé avec une partie de fixation adhésivée recouverte d'un film protecteur, une tête automatisée de pose du joint découpé dans le profilé par des moyens de découpe, un robot manipulant soit l'élément de carrosserie autour de la tête automatisée qui est fixe, soit la tête automatisée autour de la caisse ou de l'élément de carrosserie qui est fixe, la cellule de pose comprenant également des moyens de préhension du film protecteur du profilé, ces moyens de préhension étant constitués par au moins un dispositif apte à décoller le film protecteur du profilé, qui est caractérisée en ce que le dispositif apte à décoller le film protecteur coopère avec des moyens de reprise du film protecteur après découpe du joint dans le profilé.

A titre d'exemple, le dispositif apte à venir au contact du film protecteur pour le décoller du profilé est un galet gratteur ou analogue.

Selon un mode de réalisation de l'invention, les moyens de reprise sont constitués par des languettes déposées sur le film protecteur avant la découpe du joint, ces languettes pouvant être prélevées une à une dans une pile fixe par un support mobile et déposées sur le film protecteur du profilé.

D'une manière générale, les languettes peuvent déborder latéralement du film protecteur, peuvent être soudées sur le profilé par au moins une tête de soudage ou être auto-collantes.

Selon un autre mode de réalisation de l'invention, le film protecteur s'étend sur une largeur plus grande que celle du système adhésivé du profilé, et les moyens de reprise du film protecteur sont constitués par la partie du film protecteur non en contact avec le système adhésivé du profilé.

L'invention peut s'appliquer à d'autres domaines que celui de l'industrie automobile, en particulier dans l'industrie du bâtiment par exemple.

D'autres avantages, caractéristiques et détails de l'invention ressortiront du complément de description qui va suivre en références aux dessins annexés, donnés à titre d'exemple et dans lesquels :
- la figure 1 est une vue schématique d'un mode de réalisation d'une cellule de pose en continu selon l'invention d'un joint adhésivé, cette cellule comprenant notamment un robot manipulateur et une tête de pose automatisée ;
- la figure 2 est une vue en coupe d'un exemple de joint adhésivé déposé par la cellule de la figure 1 ;
- la figure 3 est une vue de dessus schématique d'un mode de réalisation d'une tête automatisée de pose du joint ;
- la figure 4 est une vue en perspective d'un joint adhésivé revêtu d'une languette de reprise ;
- la figure 5 est une vue simplifiée d'un autre mode de réalisation d'une cellule dans laquelle un joint est déposé par une tête automatisée mobile autour d'une porte fixe ;
- la figure 6 est une vue simplifiée d'un autre mode de réalisation d'une cellule dans laquelle un joint est déposé sur la caisse d'un véhicule à moteur ; et
- la figure 7 est une vue simplifiée d'un autre mode de réalisation d'une cellule dans laquelle un joint de vitrage est déposé autour d'une vitre.

D'une manière générale, l'invention concerne une cellule de pose dynamique en continu d'un joint d'étanchéité, en particulier un joint adhésivé, sur la caisse ou un élément de carrosserie d'un véhicule à moteur dans le domaine de l'industrie automobile par exemple. Par caisse, il faut globalement entendre le châssis du véhicule à moteur, qui forme une carrosserie et, par élément de carrosserie, il faut entendre un ouvrant tel qu'une porte, un coffre ou un capot par exemple, mais également une vitre sur le contour duquel la cellule pose un joint d'étanchéité.

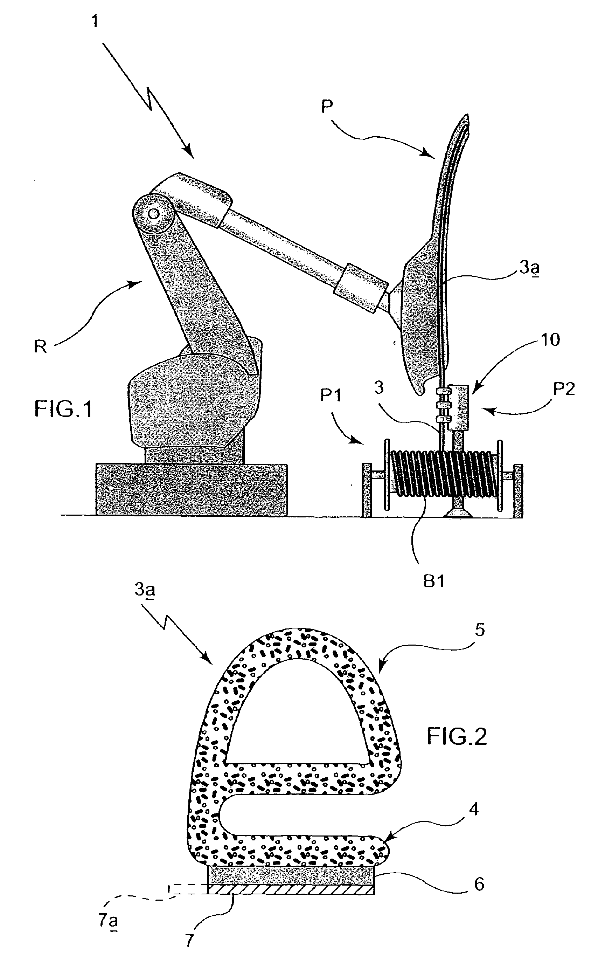

Dans l'exemple de réalisation illustré à la figure 1, la cellule 1 est conçue de manière à déposer en continu un joint d'étanchéité 3a sur le contour d'un élément de carrosserie tel une porte P. Cette cellule 1 comprend notamment un poste d'alimentation P₁ où est stocké sur une grande longueur, sur une bobine B₁ par exemple, un profilé d'étanchéité adhésivé 3, un robot manipulateur R qui se saisit d'une porte P amenée par une balancelle ou un convoyeur par exemple pour la déplacer devant un poste P₂ de pose fixe comprenant notamment une tête automatisée 10 qui va au moins découper un joint d'étanchéité 3a à longueur dans le profilé 3 tiré depuis le poste d'alimentation P₁ pour le poser sur la porte mobile P qui est ramenée ensuite sur une balancelle ou un convoyeur par exemple par le robot R.

Sur la figure 2, on a illustré la forme du joint d'étanchéité 3a qui comprend par exemple une partie de fixation 4 sensiblement plane qui est surmontée d'un côté par une partie d'étanchéité tubulaire 5. La face libre de la partie fixation 4 reçoit un système adhésif 6, tel un ruban adhésif double face, qui est revêtu d'un film protecteur 7. Le profilé d'étanchéité 3 est fabriqué par extrusion ou coextrusion d'un ou de plusieurs matériaux élastomères, thermoplastiques ou thermoplastiques élastomères, le système adhésif 6 étant déposé sur le profilé après son extrusion ou coextrusion. Le profilé 3 est ensuite stocké sur une grande longueur sur un support provisoire qui peut être constitué par la bobine B₁ par exemple montée libre en rotation (figure 1).

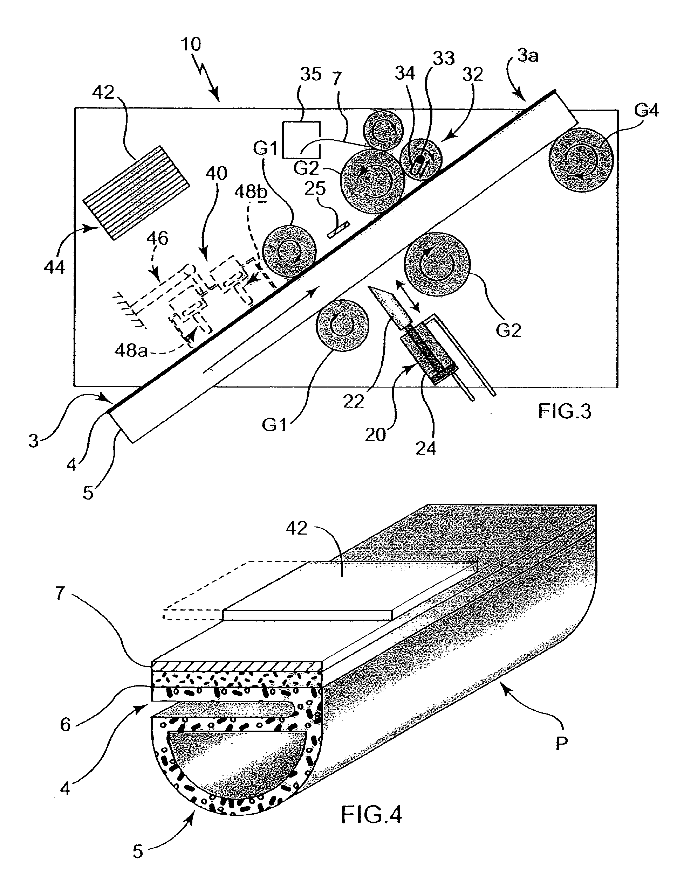

Le poste P₂ de pose fixe des figures 1 et 3 comprend notamment la tête automatisée 10 de pose dynamique d'un joint d'étanchéité 3a qui est déroulé depuis la bobine B1 en étant tiré par exemple par au moins deux couples de galets d'entraînement G1 et G2, qui prennent respectivement appui sur la partie de fixation 4 et la partie d'étanchéité 5 du profilé 3. La tête automatisée 10 comprend au moins des moyens de découpe 20 du profilé 3 avec le film protecteur 7 pour couper la longueur du joint d'étanchéité 3a en cours de pose sur la porte P, ou pour effectuer une découpe autre pour le passage d'une vis par exemple. Ces moyens de découpe 20 sont constitués par un outil de coupe 22 placé d'un côté du profilé 3 et qui peut être supporté par un support 24 mobile en un mouvement de va-et-vient, et qui coopère avec une contre-forme 25 fixe placée de l'autre côté du profilé 3. Les moyens de découpe 20 sont par exemple situés entre les deux couples de galets d'entraînement G1 et G2.

La tête automatisée 10 comprend des moyens de préhension 30 du film protecteur 7 du profilé 3 qui peuvent être constitués par exemple par un dispositif 32 tel un galet gratteur qui roule sur la partie de fixation 4 du profilé 3 et auquel va adhérer le film protecteur 7 après l'avoir décollé du profilé 3. Ces moyens de préhension 30 peuvent être situés après les moyens de découpe 20 pour éviter que le profilé 3 n'adhère ne serait-ce que partiellement à la contre-forme 25 des moyens de découpe 20. Le galet gratteur 32 est par exemple situé en aval de l'un des galets d'entraînement G2 et coopère avec celui-ci pour entraîner le film protecteur 7 vers un réservoir de stockage 35. Le galet gratteur 32 a son axe d'articulation 33 qui est monté dans une lumière 34 à l'intérieur de laquelle il peut se déplacer pour prendre une première position où il vient au contact avec le profilé 3 pour appréhender le film protecteur 7, et une seconde position où il n'est plus au contact du profilé 3 et achemine le film protecteur 7 vers le réservoir de stockage 35.

Selon un autre mode de réalisation, ces moyens de préhension 30 peuvent être complétés par des moyens 40 situés par exemple en amont des moyens de découpe 20 pour déposer des languettes de reprise 42 sur le film protecteur 7 du profilé. Ces languettes 42 sont par exemple stockées dans une pile fixe 44 prélevées une à une par les moyens 40 qui sont constitués par un dispositif mobile 46 qui est équipé de moyens pour fixer une languette 42 sur le film protecteur 7, ces moyens étant par exemple constitués par deux têtes de soudage 48a et 48b qui réalisent deux points de soudure. Les moyens 40 peuvent coopérer avec le galet gratteur 32 précité ou par tout autre moyen équivalent, sachant que chaque languette 42 peut déborder latéralement ou présenter une largeur plus grande que celle du profilé pour faciliter sa préhension par le galet gratteur 32 situé en aval des moyens de découpe 20. Bien entendu, les languettes 42 sont déposées en fonction de la longueur des joints d'étanchéité, et les moyens de découpe 20 sont commandés pour couper le profilé 3 au niveau d'une languette 42. En variante, les languettes 42 peuvent être soudées ou être auto-collantes, et les moyens de préhension 30 peuvent être également situés entre les moyens de découpe 20 et le galet gratteur 32. Sur la figure 4, on a représenté une languette 42 telle que déposée sur le film protecteur 7 du profilé 3.

Selon un autre mode de réalisation, on peut supprimer le poste de pose de languettes 42 qui favorisent la préhension du film protecteur 7 du profilé 3 en prévoyant d'appliquer au moins localement sur le système adhésif 6 du profilé 3 un film protecteur 7 dont la largeur est supérieure à celle du système adhésif 6 pour faciliter sa préhension par le galet gratteur 32. Sur la figure 2, on a illustré en traits pointillés un film protecteur 7 qui se prolonge latéralement par une partie 7a qui déborde du système adhésif 6.

Selon encore un autre mode de réalisation, on peut également supprimer le poste de pose des languettes 42, en prévoyant de monter les moyens de découpe 20 après les moyens de reprise du film protecteur 7.

Enfin, selon encore un autre mode de réalisation et toujours pour supprimer le poste de pose de languettes 42 et simplifier ainsi la structure de la tête automatisée 10, on peut envisager que les moyens de découpe 20 coupent le profilé 3 mais sans toucher au film protecteur 7 qui reste continu et pris par le galet gratteur 32, les moyens de découpe étant dénommés à "mi-chair".

La tête automatisée 10 applique le joint d'étanchéité 3a dépourvu de son film protecteur 7 sur la porte P au moyen d'au moins un galet presseur G₄, ce galet étant moteur et fonctionnant en synchronisme avec les galets d'entraînement G₁ et G₂.

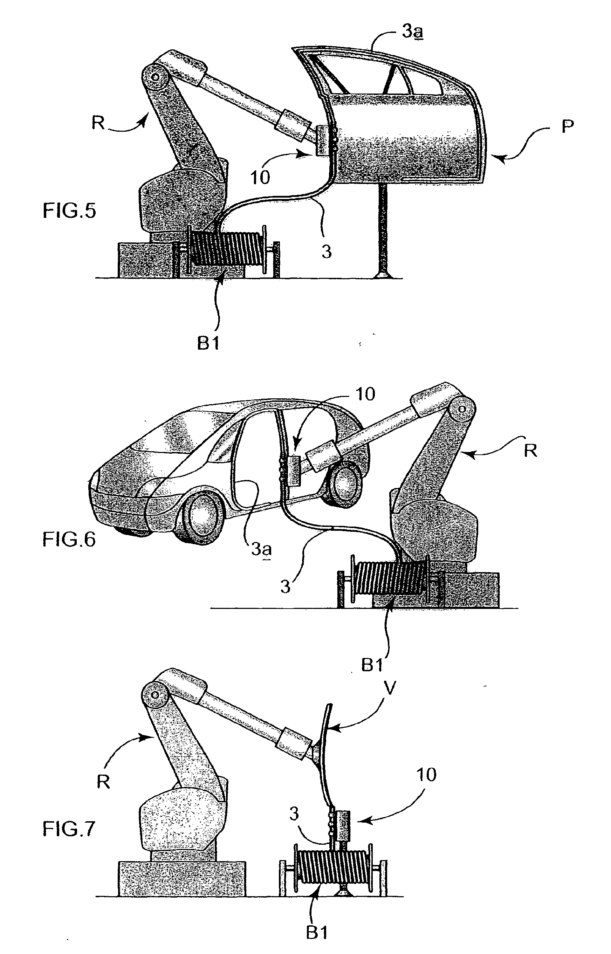

Sur les figures 5 à 7, on a illustré schématiquement des variantes de réalisation de la cellule de pose illustrée à la figure 1.

Dans le cas de la figure 5, la tête automatisée 10 est portée par le robot manipulateur R qui la déplace le long du contour d'une porte P maintenue fixe. Dans le cas de la figure 6, le robot R supporte la tête automatisée 10 et dépose le joint 3a sur le contour de la caisse fixe qui recevra ensuite sa porte P. Dans le cas de la figure 7, l'élément supporté par le robot R est une vitre V sur laquelle la tête automatisée fixe 10 dépose un joint.

## Revendications

1. Cellule de pose dynamique et en continu d'un joint d'étanchéité adhésivé (3a) sur une caisse ou un élément de carrosserie d'un véhicule à moteur par exemple, cette cellule (1) comprenant au moins un poste d'alimentation (P₁) d'un profilé extrudé (3) avec une partie de fixation (4) qui reçoit un système adhésivé (6) recouvert d'un film protecteur (7), une tête automatisée de pose (10) du joint (3a) découpé à longueur dans le profilé (3) par des moyens de découpe (20), un robot (R) manipulant soit l'élément de carrosserie autour de la tête automatisée qui est fixe, soit la tête automatisée autour de la caisse ou de l'élément de carrosserie qui est fixe, la cellule de pose (1) comprenant également des moyens de préhension (30) du film protecteur (7) du profilé (3), ces moyens de préhension (30) étant constitués par au moins un dispositif (32) apte à décoller le film protecteur (7) du profilé (3), **caractérisée en ce que** le dispositif (32) apte à décoller le film protecteur (7) coopère avec des moyens de reprise (7a, 42) du film protecteur (7) après découpe du joint (3a) dans le profilé (3).

2. Cellule de pose selon la revendication 1, dans laquelle le dispositif (32) apte à venir au contact du film protecteur (7) pour le décoller du profilé (3) est un galet gratteur.

3. Cellule de pose selon la revendication 1 ou 2, dans laquelle les moyens de reprise sont constitués par des languettes (42) déposées sur le film protecteur (7) avant la coupe du joint (3a).

4. Cellule de pose selon la revendication 3, dans laquelle les languettes (42) sont prélevées une à une dans une pile fixe (44) par un support mobile (46) et déposées sur le film protecteur (7) du profilé (3).

5. Cellule de pose selon la revendication 3 ou 4, dans laquelle les languettes (42) débordent latéralement du film protecteur (7).

6. Cellule de pose selon l'une des revendications 3 à 5, dans laquelle les languettes (42) sont soudées sur le profilé (3) par au moins une tête de soudage (48a).

7. Cellule de pose selon l'une des revendications 3 à 5, dans laquelle les languettes (42) sont auto-collantes.

8. Cellule de pose selon l'une des revendications 3 à 7, dans laquelle les moyens de découpe (20) coupent un joint d'étanchéité (3a) dans le profilé (3) au niveau d'une languette (42).

9. Cellule de pose selon la revendication 1 ou 2, dans laquelle le film protecteur (7) s'étend sur une largeur plus grande que celle du système adhésivé (6) du profilé (3), et dans laquelle les moyens de reprise du film protecteur sont constitués par la partie (7a) du film protecteur (7) non en contact avec le système adhésivé (6) du profilé (7).
